# EUROPÄISCHE PATENTANMELDUNG

(11) **EP 4 631 824 A1**
(43) Veröffentlichungstag der Anmeldung: **15.10.2025**
(21) Anmeldenummer: 25162381.5
(22) Anmeldetag: 07.03.2025
(51) Int. Cl.: B61L 15/00, B61L 23/04, B61L 25/02, G06T 3/14, G06T 7/73

(54) **VERFAHREN UND EINRICHTUNGEN ZUM BETREIBEN EINES SCHIENENFAHRZEUGS**

(30) Priorität: 10.04.2024 DE 102024203289
(71) Anmelder: Siemens Mobility GmbH, 80997 München (DE)
(72) Erfinder: Fuchs, Stefan, 15745 Wildau (DE)
(74) Vertreter: Siemens Patent Attorneys

(57) **Zusammenfassung**

Die Erfindung bezieht sich unter anderem auf ein Verfahren zum Betreiben eines Schienenfahrzeugs (10). Bei dem Verfahren ist erfindungsgemäß vorgesehen, dass mit einem Kamerasystem (100) Bilder der Umgebung des Schienenfahrzeugs (10) unter Bildung realer Bilddaten (RB) aufgenommen werden, die realen Bilddaten (RB) in fiktive Vogelperspektivbilddaten (FVPD) umgerechnet werden, die Referenzvogelperspektivdaten (RVPD) entsprechen, sofern bei der Umrechnung der realen Bilddaten (RB) in die fiktiven Vogelperspektivbilddaten (FVPD) der für die Umrechnung angenommene Ort des Schienenfahrzeugs (10) dem realen Ort entspricht und die für die Umrechnung angenommene Orientierung des Schienenfahrzeugs (10) der realen Orientierung entspricht, die fiktiven Vogelperspektivbilddaten (FVPD) und die Referenzvogelperspektivdaten (RVPD) verglichen werden und die für die Umrechnung angenommene Orientierung des Schienenfahrzeugs (10) im Rahmen eines Modifikationsverfahrens modifiziert wird und modifizierte fiktive Vogelperspektivbilddaten (FVPD) errechnet werden, bis ein Abbruchkriterium erfüllt wird, und die bei Erfüllung des Abbruchkriteriums angenommene Orientierung des Schienenfahrzeugs (10) als die reale Orientierung des Schienenfahrzeugs (10) erfasst und eine entsprechende Orientierungsangabe (OAt) erzeugt wird.

## Beschreibung

Die Erfindung bezieht sich auf Verfahren zum Betreiben eines Schienenfahrzeugs, auf Orientierungserfassungseinrichtungen und Fahrzeugsteuereinrichtungen für Schienenfahrzeuge sowie auf Schienenfahrzeuge als solche.

Bei der Fahrt von Schienenfahrzeugen tritt aufgrund der Ausgestaltung der Schienen und der Räder ein gewisses Schwanken der Orientierung der Schienenfahrzeuge auf, sodass mit anderen Worten die Ausrichtung der Fahrzeuglängsrichtung zumindest geringfügig von der jeweiligen Fahrtrichtung abweichen kann. Eine solche Abweichung kann bei der Überwachung des Fahrbetriebs und der Fahrzeugsteuerung zu Problemen führen.

Der Erfindung liegt die Aufgabe zugrunde, ein Verfahren anzugeben, mit dem sich in einfacher Weise die jeweilige Orientierung des Schienenfahrzeugs ermitteln lässt.

Diese Aufgabe wird erfindungsgemäß durch ein Verfahren mit den Merkmalen gemäß Patentanspruch 1 gelöst. Vorteilhafte Ausgestaltungen des erfindungsgemäßen Verfahrens sind in Unteransprüchen angegeben.

Danach ist erfindungsgemäß vorgesehen, dass mit einem Kamerasystem Bilder der Umgebung des Schienenfahrzeugs unter Bildung realer Bilddaten aufgenommen werden, die realen Bilddaten in fiktive Vogelperspektivbilddaten umgerechnet werden, die Referenzvogelperspektivdaten entsprechen, sofern bei der Umrechnung der realen Bilddaten in die fiktiven Vogelperspektivbilddaten der für die Umrechnung angenommene Ort des Schienenfahrzeugs dem realen Ort entspricht und die für die Umrechnung angenommene Orientierung des Schienenfahrzeugs der realen Orientierung entspricht, die fiktiven Vogelperspektivbilddaten und die Referenzvogelperspektivdaten verglichen werden und die für die Umrechnung angenommene Orientierung des Schienenfahrzeugs im Rahmen eines Modifikationsverfahrens modifiziert wird und modifizierte fiktive Vogelperspektivbilddaten errechnet werden, bis ein Abbruchkriterium erfüllt wird, und die bei Erfüllung des Abbruchkriteriums angenommene Orientierung des Schienenfahrzeugs als die reale Orientierung des Schienenfahrzeugs erfasst und eine entsprechende Orientierungsangabe erzeugt wird.

Ein wesentlicher Vorteil des erfindungsgemäßen Verfahrens ist darin zu sehen, dass dieses in sehr einfacher Weise und mit geringem zusätzlichem Komponentenaufwand durchgeführt werden kann, da hardwaremäßig zusätzlich lediglich ein Kamerasystem zur Aufnahme der realen Bilddaten vorgesehen werden muss, sofern ein solches aus anderen betrieblichen Gründen nicht bereits vorhanden ist. Die Verfahrensschritte zur Ermittlung der Orientierungsangabe können mit Hardware in Form von Rechenanlagen durchgeführt werden, die standardmäßig in modernen Schienenfahrzeugen wie beispielsweise deren Fahrzeugsteuergeräten bereits vorhanden ist und lediglich durch softwaremäßige Nachrüstung zur Durchführung des erfindungsgemäßen Verfahrens ertüchtigt werden kann. Entsprechendes gilt, wenn das Verfahren streckenseitig mit streckenseitiger Hardware durchgeführt werden soll.

Die fiktiven Vogelperspektivbilddaten repräsentieren datenmäßig vorzugsweise die Umgebung des von dem Schienenfahrzeug jeweils befahrenen Abschnitts der Eisenbahngleisanlage. Die fiktiven Vogelperspektivbilddaten bilden die Umgebung vorzugsweise in einem Winkel von 360 Grad um das Schienenfahrzeug herum ab.

Die Referenzvogelperspektivdaten repräsentieren vorzugsweise die gesamte von dem Schienenfahrzeug befahrbare Eisenbahngleisanlage, also alle von dem Schienenfahrzeug befahrbaren Abschnitte der Eisenbahngleisanlage und somit auch stets denjenigen Abschnitt, der von dem Schienenfahrzeug zu einem beliebigen Zeitpunkt befahren wird.

Die Referenzvogelperspektivdaten und die fiktiven Vogelperspektivbilddaten sind vorzugsweise jeweils koordinatensystembezogen und beziehen sich vorzugsweise auf dasselbe Koordinatensystem, beispielsweise jeweils auf dasselbe globale Koordinationssystem.

Mit Blick auf eine Hinderniserkennung während der Fahrt des Schienenfahrzeugs wird es als vorteilhaft angesehen, wenn eine zur Hinderniserkennung geeignete Komponente vorhanden ist und mit dieser Komponente eine Prüfung durchgeführt wird, ob sich in einem in Fahrtrichtung vorausliegenden Streckenabschnitt ein Hindernis befindet, wobei bei der Prüfung die Orientierungsangabe herangezogen wird.

Mit Blick auf einen geringen Hardwareaufwand wird es als vorteilhaft angesehen, wenn die zur Hinderniserkennung geeignete Komponente einen Bestandteil des Kamerasystems bildet und zumindest eine Teilmenge der realen Bilddaten erzeugt und die realen Bilddaten der Komponente hinsichtlich der Existenz eines Hindernisses in einem in Fahrtrichtung vorausliegenden Streckenabschnitt geprüft werden, wobei bei der Prüfung die Orientierungsangabe herangezogen wird.

Mit Blick auf eine von streckenseitigen Einrichtungen unabhängige Hinderniserkennung wird es als vorteilhaft angesehen, wenn das Kamerasystem ein fahrzeugeigenes Kamerasystem ist und die realen Bilddaten fahrzeugseitig aufgenommen werden. Alternativ oder zusätzlich können auch reale Bilddaten herangezogen werden, die mit einem streckenseitigen Kamerasystem aufgenommen werden.

Die Referenzvogelperspektivdaten können auf Luftaufnahmen basieren, die die von dem Schienenfahrzeug befahrbare Eisenbahngleisanlage zeigen; alternativ oder zusätzlich können die Referenzvogelperspektivdaten auf Aufnahmen basieren, die bei Referenzfahrten auf der von dem Schienenfahrzeug befahrbaren Eisenbahngleisanlage von einem Messfahrzeug in dessen bekannten Positionen und Ausrichtungen aufgenommen worden sind.

Auch wird es als vorteilhaft angesehen, wenn im Rahmen des Modifikationsverfahrens sowohl der für die Umrechnung angenommene Ort des Schienenfahrzeugs als auch die für die Umrechnung angenommene Orientierung des Schienenfahrzeugs modifiziert werden und zusätzlich eine den Ort des Schienenfahrzeugs angebende Ortsangabe ermittelt wird.

Die zusätzliche Ortsangabe wird vorzugsweise ermittelt, indem im Rahmen des Modifikationsverfahrens der für die Umrechnung der realen Bilddaten in die fiktiven Vogelperspektivbilddaten angenommene Ort des Schienenfahrzeugs modifiziert wird und die modifizierten fiktiven Vogelperspektivbilddaten errechnet werden, bis das Abbruchkriterium erfüllt wird, und der bei Erfüllung des Abbruchkriteriums angenommene Ort des Schienenfahrzeugs als der reale Ort des Schienenfahrzeugs erfasst und eine entsprechende Ortsangabe erzeugt wird.

Die Erfindung bezieht sich außerdem auf eine Orientierungserfassungseinrichtung für ein Schienenfahrzeug.

Erfindungsgemäß ist bezüglich einer solchen Orientierungserfassungseinrichtung vorgesehen, dass diese umfasst: eine Umrechnungseinrichtung, die dazu ausgestaltet ist, reale Bilddaten eines Kamerasystem, die Bilder der Umgebung des Schienenfahrzeugs zeigen, in fiktive Vogelperspektivbilddaten umzurechnen, und eine Vergleichs- und Modifikationseinrichtung, die dazu ausgestaltet ist, die fiktiven Vogelperspektivbilddaten mit Referenzvogelperspektivdaten zu vergleichen und die für die Umrechnung der realen Bilddaten angenommene Orientierung des Schienenfahrzeugs im Rahmen eines Modifikationsverfahrens zu modifizieren und modifizierte fiktive Vogelperspektivbilddaten zu errechnen, bis ein Abbruchkriterium erfüllt wird, und die bei Erfüllung des Abbruchkriteriums angenommene Orientierung des Schienenfahrzeugs als tatsächliche Orientierung des Schienenfahrzeugs zu erfassen und eine entsprechende Orientierungsangabe zu erzeugen.

Bezüglich der Vorteile der erfindungsgemäßen Orientierungserfassungseinrichtung und deren vorteilhafter Ausgestaltungen sei auf die obigen Ausführungen im Zusammenhang mit dem erfindungsgemäßen Verfahren und dessen vorteilhafter Ausgestaltungen verwiesen.

Bei einer bevorzugten Ausgestaltung der Orientierungserfassungseinrichtung ist vorgesehen, dass diese eine Rechenanlage umfasst oder in eine solche integriert ist, die eine Recheneinrichtung, die ein oder mehr Recheneinheiten umfassen kann, und einen Speicher aufweist, und in dem Speicher ein Computerprogrammprodukt abgespeichert ist, das bei Ausführung durch die Recheneinrichtung die Umrechnungseinrichtung und die Vergleichs- und Modifikationseinrichtung bildet.

Die Umrechnungseinrichtung und die Vergleichs- und Modifikationseinrichtung bilden bei einer besonders bevorzugten Ausgestaltung Bestandteile des Schienenfahrzeugs. Alternativ oder zusätzlich (z. B. zur Redundanz) können die Umrechnungseinrichtung und die Vergleichs- und Modifikationseinrichtung durch in einer Cloud arbeitende Software gebildet sein.

Die Erfindung bezieht sich außerdem auf ein Schienenfahrzeug. Bezüglich des Schienenfahrzeugs ist erfindungsgemäß vorgesehen, dass dieses eine Orientierungserfassungseinrichtung wie oben beschrieben aufweist.

Bezüglich der Vorteile des erfindungsgemäßen Schienenfahrzeugs und dessen vorteilhafter Ausgestaltungen sei auf die obigen Ausführungen im Zusammenhang mit dem erfindungsgemäßen Verfahren und dessen vorteilhafter Ausgestaltungen verwiesen.

Vorteilhaft ist es, wenn das Schienenfahrzeug eine Recheneinrichtung, die ein oder mehr Recheneinheiten umfassen kann, und einen Speicher aufweist und in dem Speicher ein Computerprogrammprodukt abgespeichert ist, das bei Ausführung durch die Recheneinrichtung die Umrechnungseinrichtung und die Vergleichs- und Modifikationseinrichtung der Orientierungserfassungseinrichtung bildet.

Das Kamerasystem bildet vorzugsweise einen Bestandteil des Schienenfahrzeugs, dessen Orientierung ermittelt werden soll.

Das Schienenfahrzeug umfasst vorzugsweise eine Hinderniserkennungseinrichtung, die die Orientierungsangabe und die realen Bilder des Kamerasystems bei der Hinderniserkennung berücksichtigt.

Die Erfindung bezieht sich außerdem auf ein Computerprogrammprodukt. Erfindungsgemäß ist vorgesehen, dass das Computerprogrammprodukt Programmbefehle umfasst, die bei Ausführung durch eine Recheneinrichtung diese veranlassen, die Umrechnungseinrichtung und die Vergleichs- und Modifikationseinrichtung einer Orientierungserfassungseinrichtung wie oben beschrieben zu bilden und/oder ein Verfahren wie oben beschrieben auszuführen.

Die Erfindung bezieht sich außerdem auf ein Fahrzeugsteuergerät für ein Schienenfahrzeug. Erfindungsgemäß ist vorgesehen, dass das Fahrzeugsteuergerät eine Recheneinrichtung, die ein oder mehr Recheneinheiten umfassen kann, und einen Speicher aufweist, und in dem Speicher ein Computerprogrammprodukt abgespeichert ist, das bei Ausführung durch die Recheneinrichtung diese veranlassen, die Umrechnungseinrichtung und die Vergleichs- und Modifikationseinrichtung einer Orientierungserfassungseinrichtung zu bilden und/oder ein Verfahren wie oben beschrieben auszuführen.

Die Erfindung wird nachfolgend anhand von Ausführungsbeispielen näher erläutert; dabei zeigen beispielhaft:
- Figur 1: Bestandteile eines Ausführungsbeispiels für ein erfindungsgemäßes Schienenfahrzeug in einer schematischen Seitenansicht, wobei anhand des Schienenfahrzeugs Ausführungsbeispiele für erfindungsgemäße Verfahren sowie Ausführungsbeispiele für erfindungsgemäße Orientierungserfassungseinrichtungen erläutert werden,
- Figur 2: das Schienenfahrzeug gemäß Figur 1 in einer schematischen Draufsicht,
- Figur 3: ein bevorzugtes Ausführungsbeispiel für eine Orientierungserfassungseinrichtung, die bei dem Schienenfahrzeug gemäß den Figuren 1 und 2 eingesetzt werden kann und ein erfindungsgemäßes Verfahren ausführen kann, näher im Detail,
- Figur 4: ein weiteres bevorzugtes Ausführungsbeispiel für eine Orientierungserfassungseinrichtung, die bei dem Schienenfahrzeug gemäß den Figuren 1 und 2 eingesetzt werden kann und ein erfindungsgemäßes Verfahren ausführen kann, näher im Detail, und
- Figur 5: ein Ausführungsbeispiel für ein erfindungsgemäßes Fahrzeugsteuergerät, das bei dem Schienenfahrzeug gemäß den Figuren 1 und 2 in vorteilhafter Weise eingesetzt werden kann und eine Orientierungserfassungseinrichtung umfasst, die ein erfindungsgemäßes Verfahren ausführen kann.

In den Figuren werden der Übersicht halber für identische oder vergleichbare Komponenten stets dieselben Bezugszeichen verwendet.

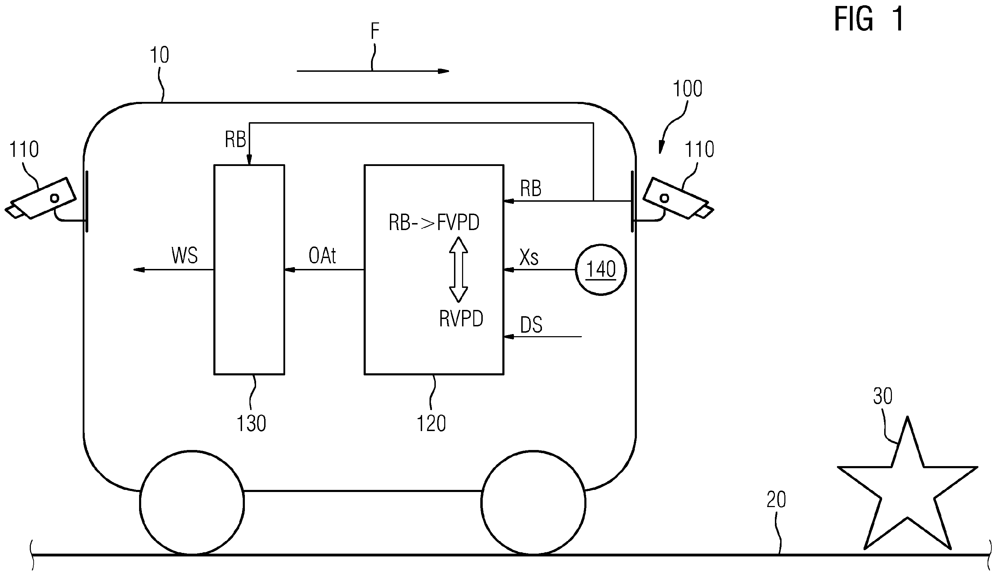

Die Figur 1 zeigt Bestandteile eines Ausführungsbeispiels für ein erfindungsgemäßes Schienenfahrzeug 10 in einer schematischen Seitenansicht während einer Fahrt auf einer Eisenbahngleisanlage 20 entlang einer durch Schienen der Eisenbahngleisanlage vorgegebenen Fahrtrichtung F in Richtung auf ein Hindernis 30. Das Schienenfahrzeug 10 umfasst unter anderem ein Kamerasystem 100, eine Orientierungserfassungseinrichtung 120 und eine Hinderniserkennungseinrichtung 130.

Das Kamerasystem 100 umfasst ein oder mehr Kameras 110, beispielsweise eine Vielzahl an Kameras 110, die die Umgebung des Schienenfahrzeugs 10 vorzugsweise in einem Bereich von 360 Grad um das Schienenfahrzeug 10 herum erfassen.

Die Hinderniserkennungseinrichtung 130 steht mit einer zur Hinderniserkennung geeigneten Komponente in Verbindung, bei der es sich beispielsweise um eine in Fahrtrichtung nach vorn ausgerichtete Kamera 110 des Kamerasystems 100 oder eine andere in der Figur 1 nicht dargestellte, nach vorn ausgerichtete Komponente, wie beispielsweise ein Radar- oder Lasersystem, handeln kann.

Die Orientierungserfassungseinrichtung 120 ist dazu ausgestaltet, reale Bilddaten RB der Kameras 110, die die Umgebung der von dem Schienenfahrzeug 10 befahrenen Eisenbahngleisanlage 20 zeigen, in fiktive Vogelperspektivbilddaten FVPD, also solche, die die Umgebung des Schienenfahrzeugs 10 in der Vogelperspektive repräsentieren, umzurechnen. Diese Umrechnung erfolgt vorzugsweise unter Berücksichtigung eines angenommenen Orts des Schienenfahrzeugs und einer angenommenen Orientierung des Schienenfahrzeugs. Als Startwert für die Durchführung der Umrechnung bzw. eines ersten Schleifendurchlaufs einer Umrechnung im Rahmen eines Optimierungsverfahrens kann die Orientierungserfassungseinrichtung 120 bezüglich des Orts des Schienenfahrzeugs 10 eine Positionsangabe Xs heranziehen, die von einer Ortungseinrichtung 140 wie beispielsweise einem GPS-System oder einem Hodometer geliefert wird. Als Startwert für die Orientierung des Schienenfahrzeugs 10 kann die Orientierungserfassungseinrichtung 120 einen Fehlwinkel gegenüber der Richtung der Schienen von Null Grad annehmen.

Die Orientierungserfassungseinrichtung 120 vergleicht darüber hinaus die fiktiven Vogelperspektivbilddaten FVPD mit Referenzvogelperspektivbilddaten RVPD, nachfolgend auch kurz Referenzvogelperspektivaten genannt.. Bei den Referenzvogelperspektivdaten RVPD handelt es sich um Vogelperspektivbilddaten, die die Umgebung der von dem Schienenfahrzeug 10 befahrbaren Eisenbahngleisanlage 20 ebenfalls in der Vogelperspektive zeigen. Die Referenzvogelperspektivdaten RVPD beziehen sich auf ein fest vorgegebenes Referenzkoordinatensystem (beispielsweise das geographische Koordinatensystem der Erde bzw. das globale Koordinatensystem) und können demgemäß auch als "reale" Vogelperspektivbilddaten der Umgebung der Eisenbahngleisanlage 20 bezeichnet werden.

Die fiktiven Vogelperspektivbilddaten FVPD, die die Orientierungserfassungseinrichtung 120 unter Einbezug der realen Bilddaten RB errechnet, beziehen sich vorzugsweise auf dasselbe Koordinatensystem wie die Referenzvogelperspektivdaten RVPD, um einen Vergleich der fiktiven Vogelperspektivbilddaten FVPD mit den Referenzvogelperspektivdaten RVPD möglichst einfach zu ermöglichen.

Die "realen" Vogelperspektivbilddaten werden als korrekt angesehen und können daher als Referenz zur Auswertung der fiktiven Vogelperspektivbilddaten FVPD herangezogen werden. Die "realen" Vogelperspektivbilddaten können beispielsweise auf Luftaufnahmen, die die von dem Schienenfahrzeug 10 befahrbare Eisenbahngleisanlage 20 zeigen, Vermessungsdaten der Eisenbahngleisanlage 20 oder Bauplanungsdaten der Eisenbahngleisanlage 20 basieren. Auch können die Referenzvogelperspektivdaten RVPD auf Messungen basieren, die bei Referenzfahrten auf der von dem Schienenfahrzeug 10 befahrbaren Eisenbahngleisanlage 20 mit einem Messfahrzeug aufgenommen worden sind.

Die Orientierungserfassungseinrichtung 120 führt mit den fiktiven Vogelperspektivbilddaten FVPD und den Referenzvogelperspektivdaten RVPD außerdem ein Modifikations- und Optimierungsverfahren durch. Dabei geht die Orientierungserfassungseinrichtung 120 von dem Ansatz aus, dass die fiktiven Vogelperspektivbilddaten FVPD den Referenzvogelperspektivdaten RVPD entsprechen, wenn bei der Umrechnung der realen Bilddaten RB in die fiktiven Vogelperspektivbilddaten FVPD der für die Umrechnung angenommene Ort des Schienenfahrzeugs 10 dem realen Ort entspricht und die für die Umrechnung angenommene Orientierung des Schienenfahrzeugs 10 der realen Orientierung entspricht; weicht der für die Umrechnung angenommene Ort von dem realen Ort des Schienenfahrzeugs 10 ab und/oder weicht die für die Umrechnung angenommene Orientierung des Schienenfahrzeugs 10 von der realen Orientierung ab, so kommt es zu einer Abweichung zwischen den fiktiven Vogelperspektivbilddaten FVPD und den Referenzvogelperspektivdaten RVPD.

Im Rahmen eines Modifikations- und Optimierungsverfahrens kann die Orientierungserfassungseinrichtung 120 die für die Umrechnung der realen Bilddaten RB in die fiktiven Vogelperspektivbilddaten FVPD herangezogenen Parameter, also die angenommene Orientierung und den angenommenen Ort des Schienenfahrzeugs 10 so lange bzw. so oft modifizieren, bis die Abweichung der fiktiven Vogelperspektivbilddaten FVPD von den Referenzvogelperspektivdaten RVPD im Bereich des für die Umrechnung angenommenen Orts des Schienenfahrzeugs 10 minimal wird und/oder eine vorgegebene Abweichungsschwelle unterschreitet.

Sobald das Minimum erreicht ist und/oder die vorgegebene Abweichungsschwelle unterschritten wird, kann die Orientierungserfassungseinrichtung 120 davon ausgehen, dass sie für die Umrechnung der realen Bilddaten RB in die fiktiven Vogelperspektivbilddaten FVPD den richtigen Ort und die richtige Orientierung des Schienenfahrzeugs 10 berücksichtigt hat und kann eine die tatsächliche Orientierung des Schienenfahrzeugs 10 angebende Orientierungsangabe OAt erzeugen, die sie der Hinderniserkennungseinrichtung 130 zur Verfügung stellt.

Die von der Orientierungserfassungseinrichtung 120 ausgegebene Orientierungsangabe OAt kann eine absolute Winkelangabe auf der Basis des Koordinatensystems der Referenzvogelperspektivdaten RVPD (also beispielsweise des globalen Koordinatensystems) sein oder alternativ einen Fehlwinkel relativ zur Ausrichtung der Schienen der Eisenbahngleisanlage 20 an dem Ort des Schienenfahrzeugs 10 quantifizieren.

Anhand der Orientierungsangabe OAt und vorzugsweise auch unter Einbezug der realen Bilddaten RB des Kamerasystems 100 ermittelt die Hinderniserkennungseinrichtung 130, ob bei der weiteren Fahrt des Schienenfahrzeugs 10 eine Kollisionsgefahr besteht. Wird eine Kollisionsgefahr festgestellt, so erzeugt die Hinderniserkennungseinrichtung 130 vorzugsweise ein Warnsignal WS.

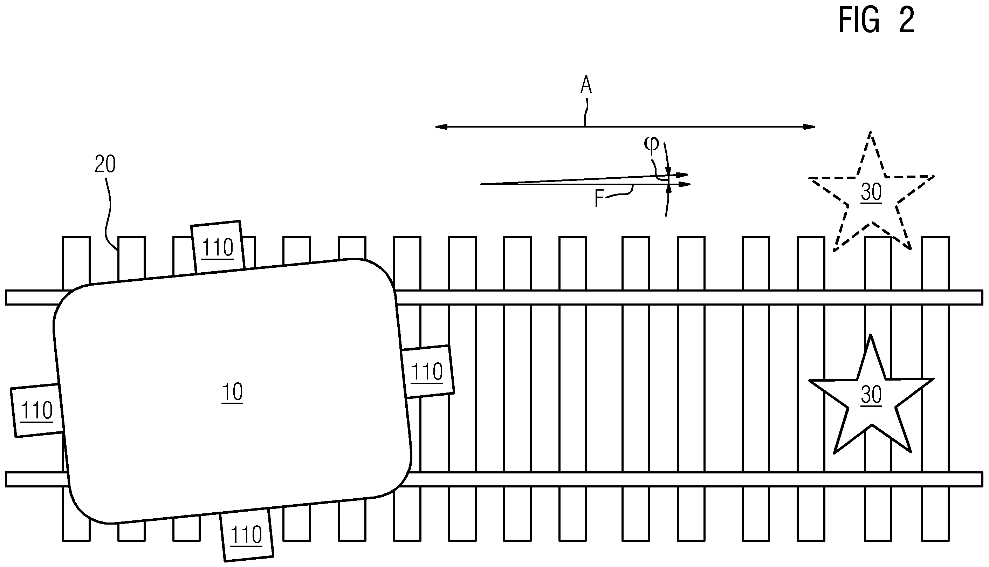

Die Figur 2 zeigt das Schienenfahrzeug 10 gemäß Figur 1 in einer vereinfachten Draufsicht. Es lässt sich erkennen, dass aufgrund der Ausgestaltung der Schienen der Eisenbahngleisanlage 20 und der Räder des Schienenfahrzeugs 10 die Orientierung des Schienenfahrzeugs 10 - verglichen mit der jeweiligen Längsrichtung der Schienen und damit der Fahrtrichtung F - während der Fahrt schwanken kann und das Schienenfahrzeug 10 geringfügig anders orientiert sein kann als die Längsrichtung der Schienen; mit anderen Worten kann ein Fehlwinkel zwischen der Längsrichtung der Schienen und der Längsrichtung des Schienenfahrzeugs 10 auftreten, der in der Figur 2 mit dem Bezugszeichen φ gekennzeichnet ist. Die von der Orientierungserfassungseinrichtung 120 ausgegebene Orientierungsangabe OAt kann beispielsweise diesen Fehlwinkel φ quantifizieren.

In der Figur 2 ist außerdem das Hindernis 30 erkennbar, das auch in den realen Bilddaten RB des Kamerasystems 100 sichtbar ist und sich in einem relativ großen Abstand A vom Schienenfahrzeug 10 befindet. Aufgrund des großen Abstands A kann der oben beschriebene Fehlwinkel φ zwischen der Orientierung des Schienenfahrzeugs 10 relativ zu der Orientierung der Schienen zu einer Fehlinterpretation der realen Bilddaten RB des Kamerasystems 100 führen, wenn dieser Fehlwinkel φ bei der Hinderniserkennung nicht berücksichtigt wird. Die Figur 2 zeigt das Hindernis 30 zur Visualisierung des Problems aus diesem Grunde sowohl neben den Schienen an einer Stelle ohne Kollisionsgefahr (gestrichelte Linie) als auch im Gleisbett mit Kollisionsgefahr (durchgezogene Linie).

Durch die Berücksichtigung der Orientierungsangabe OAt der Orientierungserfassungseinrichtung 120 bei der Auswertung der realen Bilddaten RB des Kamerasystems 100 kann die Hinderniserkennungseinrichtung 130 das Risiko verkleinern, dass ein etwaig vorhandener Fehlwinkel φ zwischen dem Schienenfahrzeug 10 und der durch die Schienen vorgegebenen Fahrtrichtung F zu einer Fehlinterpretation führt und ein im Gleisbett befindliches Hindernis 30 (siehe das mit durchgezogener Linie markierte Hindernis 30 in Figur 2) fehlerhaft als außerhalb des Gleisbetts (siehe das mit gestrichelter Linie markierte Hindernis 30 in Figur 2) klassifiziert wird.

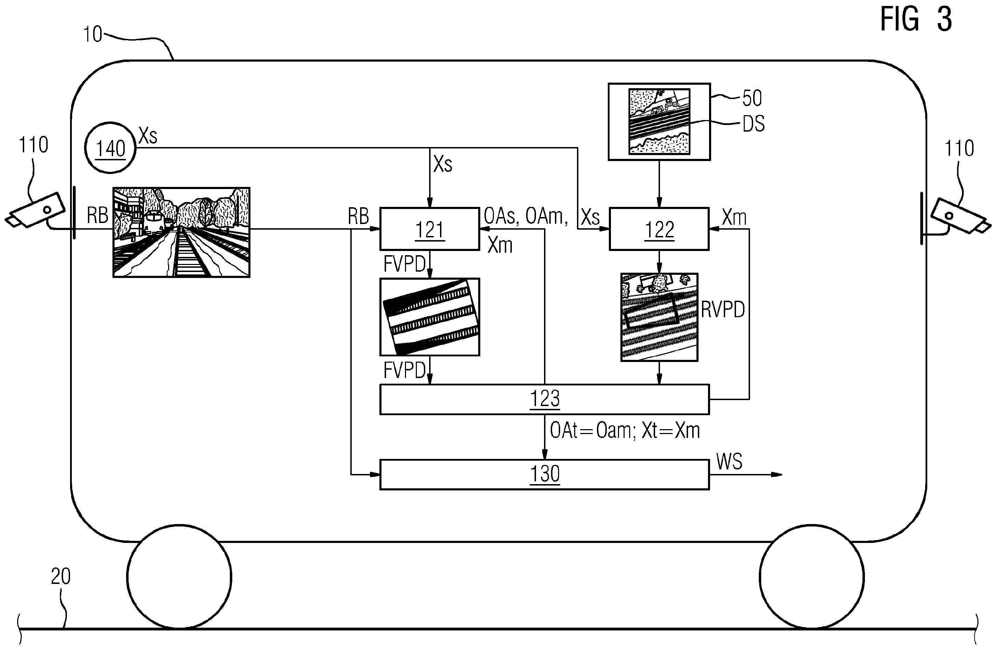

Die Figur 3 zeigt ein Ausführungsbeispiel für die Orientierungserfassungseinrichtung 120 gemäß Figur 1 näher im Detail. Die Orientierungserfassungseinrichtung 120 umfasst eine Umrechnungseinrichtung 121, die aus den realen Bilddaten RB des Kamerasystems 100 die fiktiven Vogelperspektivbilddaten FVPD, also Vogelperspektivbilddaten, die die Umgebung des Schienenfahrzeugs 10 beschreiben, ermittelt. Die Ermittlung der Vogelperspektivbilddaten FVPD kann unter Einbezug allgemein bekannter Bildauswertungssoftware erfolgen, beispielsweise unter Einbezug künstlicher Intelligenz, die zum Beispiel auf die Erkennung von Schienen und Schienenverläufen in Bilddaten RB trainiert worden ist. Die Ermittlung von Vogelperspektivbilddaten aus realen Bilddaten ist beispielsweise von Assistenzsystemen von Personenkraftwagen bekannt, so dass auch Software solcher Systeme in der Umrechnungseinrichtung 121 eingesetzt werden kann.

Darüber hinaus umfasst die Orientierungserfassungseinrichtung 120 eine Ausleseeinrichtung 122, die aus einem Speicher 50 abgespeicherte Referenzvogelperspektivdaten RVPD ausliest. Das Auslesen der Referenzvogelperspektivdaten RVPD beschränkt die Ausleseeinrichtung 122 vorzugsweise jeweils auf einen Ortsbereich, der den von der Umrechnungseinrichtung 121 bei der Umrechnung der realen Bilddaten RB in die fiktiven Vogelperspektivbilddaten FVPD herangezogenen Ort umfasst. Mit anderen Worten extrahiert die Ausleseeinrichtung 122 aus dem gesamten Referenzvogelperspektivdatensatz DS, der in dem Speicher 50 abgespeichert ist, vorzugsweise jeweils nur den ortsmäßig relevanten Datenbereich.

Der Referenzvogelperspektivdatensatz DS kann beispielsweise auf Luftaufnahmen, die die von dem Schienenfahrzeug 10 befahrene Eisenbahngleisanlage 20 zeigen, Vermessungsdaten der Eisenbahngleisanlage 20 oder Bauplanungsdaten der Eisenbahngleisanlage 20 basieren. Auch kann der Referenzvogelperspektivdatensatz DS auf Messungen basieren, die bei Referenzfahrten mit einem Messfahrzeug aufgenommen worden sind.

Die Referenzvogelperspektivdaten RVPD können nur zweidimensional sein, also die Topologie unberücksichtigt lassen, oder dreidimensional sein und Höhenangaben umfassen, die die Anlagentopologie der Eisenbahngleisanlage 20 beschreiben.

Wenn bei der Umrechnung der realen Bilddaten RB in die fiktiven Vogelperspektivbilddaten FVPD der für die Umrechnung angenommene Ort des Schienenfahrzeugs 10 dem tatsächlichen Ort des Schienenfahrzeugs 10 entspricht und die für die Umrechnung angenommene Orientierung des Schienenfahrzeugs 10 der tatsächlichen Orientierung des Schienenfahrzeugs 10 entspricht, lässt sich im Idealfall bzw. theoretisch eine perfekte Übereinstimmung zwischen den fiktiven Vogelperspektivbilddaten FVPD und den Referenzvogelperspektivdaten RVPD feststellen. Dieser Umstand wird von der Orientierungserfassungseinrichtung 120 ausgenutzt, um den tatsächlichen Ort und die tatsächliche Orientierung des Schienenfahrzeugs 10 zu ermitteln.

Die Orientierungserfassungseinrichtung 120 umfasst außerdem eine Vergleichs- und Modifikationseinrichtung 123, die jeweils die fiktiven Vogelperspektivbilddaten FVPD und die Referenzvogelperspektivdaten RVPD zu vergleicht.

Stimmen die fiktiven Vogelperspektivbilddaten FVPD und die Referenzvogelperspektivdaten RVPD überein, so lässt sich daraus schließen, dass die Umrechnung der realen Bilddaten RB in die fiktiven Vogelperspektivbilddaten FVPD auf der Basis des tatsächlichen Orts und der tatsächlichen Orientierung des Schienenfahrzeugs 10 erfolgt ist: In einem solchen Fall kann die Vergleichs- und Modifikationseinrichtung 123 ausgangsseitig eine Orientierungsangabe OAt ausgeben, die die für die Umrechnung verwendete Orientierung, die nun als tatsächlich korrekt angenommen wird, angibt und eine Ortsangabe Xt ausgeben, die den für die Umrechnung verwendeten Ort, der als tatsächlich korrekter Ort angenommen wird, angibt.

Stimmen die fiktiven Vogelperspektivbilddaten FVPD und die Referenzvogelperspektivdaten RVPD nicht oder zumindest nicht ausreichend gut überein, so kann die Vergleichs- und Modifikationseinrichtung 123 die angenommene Orientierung des Schienenfahrzeugs 10 und vorzugsweise auch den angenommenen Ort des Schienenfahrzeugs 10 im Rahmen eines Modifikationsverfahrens unter Bildung einer modifizierten Orientierungsangabe OAm und einer modifizierten Ortsangabe Xm geringfügig modifizieren und die Umrechnungseinrichtung 121 veranlassen, auf der Basis der modifizierten Orientierungsangabe OAm und der modifizierten Ortsangabe Xm modifizierte fiktive Vogelperspektivbilddaten FVPD zu errechnen. Vorzugsweise stellt die Ausleseeinrichtung 122 die Referenzvogelperspektivdaten RVPD bezogen auf die modifizierte Ortsangabe Xm zur Verfügung.

Anschließend kann die Vergleichs- und Modifikationseinrichtung 123 wiederum einen Vergleich zwischen den fiktiven Vogelperspektivbilddaten FVPD und den Referenzvogelperspektivdaten RVPD durchführen. Die Orientierungserfassungseinrichtung 120 kann diese Schleife des Modifizierens von Orientierung und Ort, des Neuberechnens der fiktiven Vogelperspektivbilddaten FVPD und den Vergleich zwischen den fiktiven Vogelperspektivbilddaten FVPD und den Referenzvogelperspektivdaten RVPD so oft durchlaufen, bis ein Abbruchkriterium erfüllt wird.

Die bei Erfüllung des Abbruchkriteriums angenommene Orientierung des Schienenfahrzeugs 10 kann die Vergleichs- und Modifikationseinrichtung 123 als tatsächliche Orientierung des Schienenfahrzeugs 10 erfassen und die entsprechende Orientierungsangabe OAt erzeugen. Entsprechendes gilt für den jeweiligen Ort des Schienenfahrzeugs 10: Den bei Erfüllung des Abbruchkriteriums angenommenen Ort Xm des Schienenfahrzeugs 10 kann die Vergleichs- und Modifikationseinrichtung 123 als tatsächlichen Ort des Schienenfahrzeugs 10 erfassen und eine entsprechende Ortsangabe Xt erzeugen, die den tatsächlichen Ort des Schienenfahrzeugs angibt.

Als Startwert für die Durchführung des Verfahrens bzw. des ersten Schleifendurchlaufs des Optimierungsverfahrens kann die Orientierungserfassungseinrichtung 120 bezüglich des Orts des Schienenfahrzeugs 10 eine Positionsangabe Xs heranziehen, die von einer Ortungseinrichtung 140 wie beispielsweise einem GPS-System oder einem Hodometer geliefert wird. Als Startwert OAs für die Orientierung des Schienenfahrzeugs 10 kann die Orientierungserfassungseinrichtung 120 einen Fehlwinkel φ gegenüber der Richtung der Schienen von Null Grad annehmen. Die jeweilige Richtung der Schienen kann beispielsweise aus einem in dem Schienenfahrzeug vorliegenden Streckenatlas, der beispielsweise in dem Speicher 50 abgespeichert und auf das bereits erwähnte globale Koordinatensystem bezogen sein kann, ausgelesen werden.

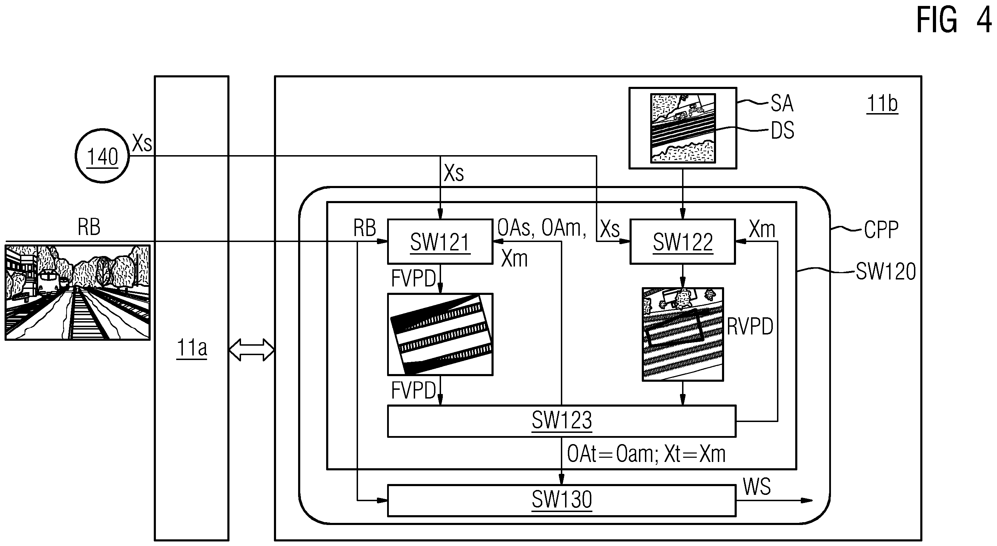

Die Figur 4 zeigt eine bevorzugte Ausgestaltung der Orientierungserfassungseinrichtung 120 gemäß Figur 3. Die Orientierungserfassungseinrichtung 120 umfasst eine Recheneinrichtung 11a, die ein oder mehr Recheneinheiten umfassen kann, und einen Speicher 11b. In dem Speicher 11b ist ein Computerprogrammprodukt CPP abgespeichert, das bei Ausführung durch die Recheneinrichtung 11a die Umrechnungseinrichtung 121, die Ausleseeinrichtung 122 und die Vergleichs- und Modifikationseinrichtung 123 der Orientierungserfassungseinrichtung 120 sowie vorzugsweise auch die Hinderniserkennungseinrichtung 130 bildet, wie sie oben beispielhaft im Zusammenhang mit den Figuren 1 bis 3 erläutert worden sind.

Das Computerprogrammprodukt CPP umfasst zu diesem Zwecke ein Orientierungserfassungssoftwaremodul SW120, das ein Umrechnungssoftwaremodul SW121, ein Auslesesoftwaremodul SW122 und ein Vergleichs- und Modifikationseinrichtungssoftwaremodul SW123 aufweist, sowie ein Hinderniserkennungssoftwaremodul SW130.

Der Referenzvogelperspektivdatensatz DS mit allen Referenzvogelperspektivdaten RVPD und vorzugsweise auch der genannte Streckenatlas sind bei dem Ausführungsbeispiel gemäß Figur 4 in einem Speicherabschnitt SA des Speichers 11b abgespeichert. Die Ausleseeinrichtung 122 extrahiert aus dem gesamten Referenzvogelperspektivdatensatz DS jeweils nur den ortsmäßig relevanten Datenbereich unter Heranziehung der jeweiligen Ortsangabe Xm bzw. der Positionsangabe Xs, die auch das Umrechnungssoftwaremodul SW121 für die Erzeugung der fiktiven Vogelperspektivdaten FVPD heranzieht.

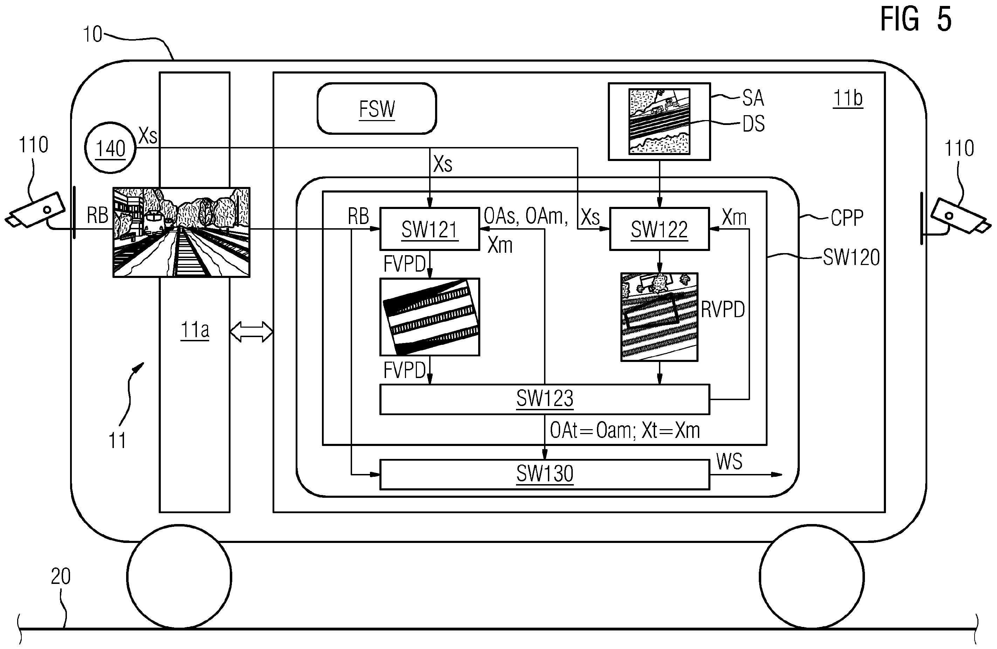

Die Figur 5 zeigt eine besonders bevorzugte Ausgestaltung des Schienenfahrzeugs 10 gemäß Figur 1. Das Schienenfahrzeug 10 ist mit einem Fahrzeugsteuergerät 11 ausgestattet, das eine Recheneinrichtung 11a, die ein oder mehr Recheneinheiten umfassen kann, und einen Speicher 11b aufweist.

In dem Speicher 11b ist eine Fahrzeugsteuersoftware FSW abgespeichert, die bei Ausführung durch die Recheneinrichtung 11a das Schienenfahrzeug 10 steuert, wie dies von herkömmlichen Schienenfahrzeugen her bekannt ist.

In dem Speicher 11b sind außerdem der Referenzvogelperspektivdatensatz DS (siehe Speicherabschnitt SA) und ein Computerprogrammprodukt CPP abgespeichert, das bei Ausführung durch die Recheneinrichtung 11a die Umrechnungseinrichtung 121, die Ausleseeinrichtung 122 und die Vergleichs- und Modifikationseinrichtung 123 der Orientierungserfassungseinrichtung 120 sowie die Hinderniserkennungseinrichtung 130 bildet, wie sie oben beispielhaft im Zusammenhang mit den Figuren 1 bis 3 erläutert worden sind. Das Computerprogrammprodukt CPP umfasst zu diesem Zwecke ein Orientierungserfassungssoftwaremodul SW120, das zur Bereitstellung der Funktion der Umrechnungseinrichtung 121 ein Umrechnungssoftwaremodul SW121, zur Bereitstellung der Funktion der Ausleseeinrichtung 122 ein Auslesesoftwaremodul SW122 und zur Bereitstellung der Funktion der Vergleichs- und Modifikationseinrichtung 123 ein Vergleichs- und Modifikationseinrichtungssoftwaremodul SW123 und zur Bereitstellung der Funktion der Hinderniserkennungseinrichtung 130 ein Hinderniserkennungssoftwaremodul SW130 aufweist.

Auch bei dem Ausführungsbeispiel gemäß Figur 5 ist vorzugsweise vorgesehen, dass der Referenzvogelperspektivdatensatz DS mit allen Referenzvogelperspektivdaten RVPD und vorzugsweise auch der genannte Streckenatlas in einem Speicherabschnitt SA des Speichers 11b abgespeichert sind. Die Ausleseeinrichtung 122 extrahiert vorzugsweise aus dem gesamten Referenzvogelperspektivdatensatz DS jeweils nur den ortsmäßig relevanten Datenbereich unter Heranziehung der jeweiligen Ortsangabe Xm bzw. der Positionsangabe Xs, die auch das Umrechnungssoftwaremodul SW121 für die Erzeugung der fiktiven Vogelperspektivdaten FVPD heranzieht.

Abschließend sei erwähnt, dass die Merkmale aller oben beschriebenen Ausführungsbeispiele untereinander in beliebiger Weise kombiniert werden können, um weitere andere Ausführungsbeispiele der Erfindung zu bilden.

Auch können alle Merkmale von Unteransprüchen jeweils für sich mit jedem der nebengeordneten Ansprüche kombiniert werden, und zwar jeweils für sich allein oder in beliebiger Kombination mit einem oder mehreren anderen Unteransprüchen, um weitere andere Ausführungsbeispiele zu erhalten.

### Bezugszeichenliste

- 10: Schienenfahrzeug
- 11: Fahrzeugsteuergerät
- 11a: Recheneinrichtung
- 11b: Speicher
- 20: Eisenbahngleisanlage
- 30: Hindernis
- 50: Speicher
- 100: Kamerasystem
- 110: Kamera
- 120: Orientierungserfassungseinrichtung
- 121: Umrechnungseinrichtung
- 122: Ausleseeinrichtung
- 123: Vergleichs- und Modifikationseinrichtung
- 130: Hinderniserkennungseinrichtung
- 140: Ortungseinrichtung

- A: Abstand
- CPP: Computerprogrammprodukt
- DS: Referenzvogelperspektivdatendatz
- F: Fahrtrichtung
- FSW: Fahrzeugsteuersoftware
- FVPD: fiktive Vogelperspektivbilddaten
- OAm: modifizierte Orientierungsangabe
- OAs: Startwert
- OAt: Orientierungsangabe
- RB: reale Bilddaten
- RVPD: Referenzvogelperspektivbilddaten
- SA: Speicherabschnitt
- SW120: Orientierungserfassungssoftwaremodul
- SW121: Umrechnungssoftwaremodul
- SW122: Auslesesoftwaremodul
- SW123: Vergleichs- und Modifikationseinrichtungssoftwaremodul
- SW130: Hinderniserkennungssoftwaremodul
- WS: Warnsignal
- Xm: modifizierte Ortsangabe
- Xs: Positionsangabe
- Xt: Ortsangabe
- φ: Fehlwinkel

## Patentansprüche

1. Verfahren zum Betreiben eines Schienenfahrzeugs (10),
**dadurch gekennzeichnet, dass**
- mit einem Kamerasystem (100) Bilder der Umgebung des Schienenfahrzeugs (10) unter Bildung realer Bilddaten (RB) aufgenommen werden,
- die realen Bilddaten (RB) in fiktive Vogelperspektivbilddaten (FVPD) umgerechnet werden, die Referenzvogelperspektivdaten (RVPD) entsprechen, sofern bei der Umrechnung der realen Bilddaten (RB) in die fiktiven Vogelperspektivbilddaten (FVPD) der für die Umrechnung angenommene Ort des Schienenfahrzeugs (10) dem realen Ort entspricht und die für die Umrechnung angenommene Orientierung des Schienenfahrzeugs (10) der realen Orientierung entspricht,
- die fiktiven Vogelperspektivbilddaten (FVPD) und die Referenzvogelperspektivdaten (RVPD) verglichen werden und die für die Umrechnung angenommene Orientierung des Schienenfahrzeugs (10) im Rahmen eines Modifikationsverfahrens modifiziert wird und modifizierte fiktive Vogelperspektivbilddaten (FVPD) errechnet werden, bis ein Abbruchkriterium erfüllt wird, und
- die bei Erfüllung des Abbruchkriteriums angenommene Orientierung des Schienenfahrzeugs (10) als die reale Orientierung des Schienenfahrzeugs (10) erfasst und eine entsprechende Orientierungsangabe (OAt) erzeugt wird.

2. Verfahren nach Anspruch 1,
**dadurch gekennzeichnet, dass**
- eine zur Hinderniserkennung geeignete Komponente vorhanden ist und mit der Komponente eine Prüfung durchgeführt wird, ob sich in einem in Fahrtrichtung vorausliegenden Streckenabschnitt ein Hindernis (30) befindet,
- wobei bei der Prüfung die Orientierungsangabe (OAt) herangezogen wird.

3. Verfahren nach Anspruch 2,
**dadurch gekennzeichnet, dass**
- die zur Hinderniserkennung geeignete Komponente einen Bestandteil des Kamerasystems (100) bildet und zumindest eine Teilmenge der realen Bilddaten (RB) erzeugt und
- die realen Bilddaten (RB) der Komponente hinsichtlich der Existenz eines Hindernisses (30) in einem in Fahrtrichtung vorausliegenden Streckenabschnitt geprüft werden,
- wobei bei der Prüfung die Orientierungsangabe (OAt) herangezogen wird.

4. Verfahren nach einem der voranstehenden Ansprüche,
**dadurch gekennzeichnet, dass**
- das Kamerasystem (100) ein fahrzeugeigenes Kamerasystem (100) ist und
- die realen Bilddaten (RB) fahrzeugseitig aufgenommen werden.

5. Verfahren nach einem der voranstehenden Ansprüche,
**dadurch gekennzeichnet, dass**
die Referenzvogelperspektivdaten (RVPD) auf Luftaufnahmen basieren, die die von dem Schienenfahrzeug (10) befahrbare Eisenbahngleisanlage (20) zeigen.

6. Verfahren nach einem der voranstehenden Ansprüche,
**dadurch gekennzeichnet, dass**
die Referenzvogelperspektivdaten (RVPD) auf Aufnahmen basieren, die bei Referenzfahrten auf der von dem Schienenfahrzeug (10) befahrbaren Eisenbahngleisanlage (20) von einem Messfahrzeug in dessen bekannten Positionen und Ausrichtungen aufgenommen worden sind.

7. Verfahren nach einem der voranstehenden Ansprüche,
**dadurch gekennzeichnet, dass**
- im Rahmen des Modifikationsverfahrens sowohl der für die Umrechnung angenommene Ort des Schienenfahrzeugs (10) als auch die für die Umrechnung angenommene Orientierung des Schienenfahrzeugs (10) modifiziert werden und
- zusätzlich eine den Ort des Schienenfahrzeugs (10) angebende Ortsangabe (Xt) ermittelt wird.

8. Verfahren nach Anspruch 7,
**dadurch gekennzeichnet, dass**
die den Ort des Schienenfahrzeugs (10) angebende Ortsangabe (Xt) ermittelt wird, indem
- im Rahmen des Modifikationsverfahrens der für die Umrechnung der realen Bilddaten (RB) in die fiktiven Vogelperspektivbilddaten (FVPD) angenommene Ort des Schienenfahrzeugs (10) modifiziert wird und die modifizierten fiktiven Vogelperspektivbilddaten (FVPD) errechnet werden, bis das Abbruchkriterium erfüllt wird, und
- der bei Erfüllung des Abbruchkriteriums angenommene Ort des Schienenfahrzeugs (10) als der reale Ort des Schienenfahrzeugs (10) erfasst und eine entsprechende Ortsangabe (Xt) erzeugt wird.

9. Orientierungserfassungseinrichtung (120) für ein Schienenfahrzeug (10),
**dadurch gekennzeichnet, dass**
die Orientierungserfassungseinrichtung (120) umfasst:
- eine Umrechnungseinrichtung (121), die dazu ausgestaltet ist, reale Bilddaten (RB) eines Kamerasystems (100), die Bilder der Umgebung des Schienenfahrzeugs (10) zeigen, in fiktive Vogelperspektivbilddaten (FVPD) umzurechnen, und
- eine Vergleichs- und Modifikationseinrichtung (123), die dazu ausgestaltet ist, die fiktiven Vogelperspektivbilddaten (FVPD) mit Referenzvogelperspektivdaten (RVPD) zu vergleichen und die für die Umrechnung angenommene Orientierung des Schienenfahrzeugs (10) im Rahmen eines Modifikationsverfahrens zu modifizieren und modifizierte fiktive Vogelperspektivbilddaten (FVPD) zu errechnen, bis ein Abbruchkriterium erfüllt wird, und die bei Erfüllung des Abbruchkriteriums angenommene Orientierung des Schienenfahrzeugs (10) als tatsächliche Orientierung des Schienenfahrzeugs (10) zu erfassen und eine entsprechende Orientierungsangabe (OAt) zu erzeugen.

10. Orientierungserfassungseinrichtung (120) nach Anspruch 9,
**dadurch gekennzeichnet, dass**
- die Orientierungserfassungseinrichtung (120) eine Recheneinrichtung (11a), die ein oder mehr Recheneinheiten umfassen kann, und einen Speicher (11b) umfasst und
- in dem Speicher (11b) ein Computerprogrammprodukt (CPP) abgespeichert ist, das bei Ausführung durch die Recheneinrichtung (11a) die Umrechnungseinrichtung (121) und die Vergleichs- und Modifikationseinrichtung (123) bildet.

11. Orientierungserfassungseinrichtung (120) nach einem der voranstehenden Ansprüche 9 bis 10,
**dadurch gekennzeichnet, dass**
das Kamerasystem (100) Bestandteil des Schienenfahrzeugs (10) ist, dessen Orientierung ermittelt werden soll.

12. Orientierungserfassungseinrichtung (120) nach einem der voranstehenden Ansprüche 9 bis 11,
**dadurch gekennzeichnet, dass**
die Umrechnungseinrichtung (121) und die Vergleichs- und Modifikationseinrichtung (123) Bestandteile des Schienenfahrzeugs (10) sind.

13. Orientierungserfassungseinrichtung (120) nach einem der voranstehenden Ansprüche 9 bis 11,
**dadurch gekennzeichnet, dass**
die Umrechnungseinrichtung (121) und die Vergleichs- und Modifikationseinrichtung (123) durch in einer Cloud arbeitende Software gebildet sind.

14. Computerprogrammprodukt (CPP) für eine Orientierungserfassungseinrichtung (120),
**dadurch gekennzeichnet, dass**
das Computerprogrammprodukt (CPP) Programmbefehle umfasst, die bei Ausführung durch eine Recheneinrichtung (11a) diese veranlassen, die Umrechnungseinrichtung (121) und die Vergleichs- und Modifikationseinrichtung (123) einer nach einem der voranstehenden Ansprüche 9 bis 13 ausgestalteten Orientierungserfassungseinrichtung (120) zu bilden und/oder ein Verfahren nach einem der voranstehenden Ansprüche 1 bis 8 auszuführen.
